# EUROPEAN PATENT APPLICATION

(11) **EP 4 711 248 A1**
(43) Date of publication of application: **18.03.2026**
(21) Application number: 25193784.3
(22) Date of filing: 04.08.2025
(51) Int. Cl.: B62D 25/04, B62D 25/08

(54) **VEHICLE SIDE PORTION STRUCTURE**

(30) Priority: 29.08.2024 JP 2024148037
(71) Applicant: TOYOTA JIDOSHA KABUSHIKI KAISHA, Toyota-shi, Aichi-ken 471-8571 (JP)
(72) Inventor: HAMADA, Yukihiro, TOYOTA-SHI, AICHI-KEN, 471-8571 (JP); UJU, Shizuma, TOYOTA-SHI, AICHI-KEN, 471-8571 (JP)
(74) Representative: Cabinet Beau de Loménie

(57) **Abstract**

A vehicle side portion structure (12) includes a pillar (22) provided at a rear side of a wheel house (14) in a vehicle framework at a front side of a vehicle, the pillar extending in a vehicle vertical direction and includes: a side wall portion (77) that extends in the vehicle vertical direction; a plurality of ribs (96,96A,98) that project from the side wall portion toward an outer side in a vehicle width direction; a vertical wall portion (88) that projects from the side wall portion further to an outer side, in the vehicle width direction, than the plurality of ribs, and that extends in the vehicle vertical direction; and a joining surface (92A) that extends in a vehicle front-rear direction from a distal end of the vertical wall portion (88), with an outer panel configuring an outer plate of the pillar being joined to the joining surface.

## Description

### BACKGROUND

### Technical Field

The present disclosure relates to a vehicle side portion structure.

### Related Art

Japanese Patent Application Laid-Open (JP-A) No. 2017-140874 recites an example of joining a lower inner panel and a lower outer panel of an A pillar (a front pillar) that has ribs.

In JP-A No. 2017-140874, a chamber portion is formed in which the lower inner panel is formed as a flat part that extends in a flat shape in a vehicle front-rear direction and a vehicle vertical direction, and the lower outer panel is formed as a hat shape that projects toward an outer side in the vehicle width direction. Thus, a structure is formed that, at a time of frontal impact of the vehicle (below referred to as a collision), transmits an impact load to a rocker or the like.

### SUMMARY

However, at a time of collision of the vehicle according to JP-A No. 2017-140874, an impact load may be directly applied, via a tire or the like, to a joining surface between the lower inner panel (a side wall) and the lower outer panel (an outer panel). This may increase a number of work steps needed for repair, as the outer panel was removed from the side wall.

In consideration of the circumstances described above, the present disclosure provides a vehicle side portion structure that may prevent an impact load at a time of collision of the vehicle from being directly applied to a joining surface between a side wall and an outer panel.

A vehicle side portion structure according to a first aspect of the present disclosure includes: a pillar provided at a rear side of a wheel house in a front side vehicle framework of the vehicle, the pillar extending in a vehicle vertical direction and including: a side wall portion that extends in the vehicle vertical direction; plural ribs that project from the side wall portion toward an outer side in a vehicle width direction; a vertical wall portion that projects from the side wall portion further to the outer side, in the vehicle width direction, than the plural ribs and that extends in the vehicle vertical direction; and a joining surface that extends in a vehicle front-rear direction from a distal end of the vertical wall portion, with an outer panel configuring an outer plate of the pillar being joined to the joining surface.

In the vehicle side portion structure according to the first aspect, the pillar provided at the rear side of the wheel house in the front side vehicle framework of the vehicle extends in the vehicle vertical direction and is provided with the side wall portion, the plural ribs, the vertical wall portion and the joining surface. The side wall portion extends in the vehicle vertical direction. The plural ribs project toward the vehicle width direction outer side from the side wall portion. The vertical wall portion projects from the side wall portion further to the vehicle width direction outer side than the plural ribs, and extends in the vehicle vertical direction. The joining surface extends in the vehicle front-rear direction from the distal end of the vertical wall portion. The outer panel that configures the outer plate of the pillar is joined to the joining surface.

An impact load that is transmitted to the wheel house at a time of vehicle collision is transmitted to the side wall portion of the pillar provided at the rear side of the wheel house. In the present disclosure, the vertical wall portion projects to the vehicle width direction outer side from the side wall portion, and the joining surface to which the outer panel of the pillar is joined protrudes in the vehicle front-rear direction from the distal end of the vertical wall portion. That is, the joining surface is disposed further to the vehicle width direction outer side than the side wall portion provided at the rear side of the wheel house.

Thus, a position of the joining surface with the outer panel in the vehicle width direction is shifted to the outer side in the vehicle width direction relative to a position of application of the impact load transmitted to the side wall portion via the wheel house. As a result, direct application of the impact load to the joining surface may be prevented.

Because the joining surface with the outer panel is provided at a surface at the outer side in the vehicle width direction of the vertical wall portion, visibility of a "seal line" may be assured. Further, because the visibility of this seal line is assured in the present disclosure, sealing with the outer panel may be improved and a number of steps in quality management may be reduced.

The meaning of the term "vehicle collision" as used in the present disclosure is intended to encompass both "full overlap" frontal impacts and also offset impacts, oblique impacts and small overlap impacts.

A vehicle side portion structure according to a second aspect of the present disclosure, in the vehicle side portion structure of the first aspect, further includes an inner panel that includes the side wall portion and that configures an inner plate of the pillar, and a closed cross section portion is formed between the inner panel and the outer panel in the state in which the outer panel is joined to the joining surface.

In the vehicle side portion structure according to the second aspect, in the state in which the outer panel configuring the outer plate of the pillar is joined to the joining surface, the closed cross section portion is formed between the inner panel, which includes the side wall portion, structuring the inner plate of the pillar, and the outer panel. Therefore, stiffness of the pillar structured by the inner panel and the outer panel may be improved compared to a structure with an open cross section between an inner panel and an outer panel.

In a vehicle side portion structure according to a third aspect of the present disclosure, in the vehicle side portion structure of the first aspect, the vertical wall portion includes an angled portion, at least a portion of which is inclined to a front side or a rear side in the vehicle front-rear direction, on progression toward an outer side in the vehicle width direction.

In the vehicle side portion structure according to the third aspect, at least a portion of the vertical wall portion includes the angled portion. On progression toward the vehicle width direction outer side, the angled portion is inclined toward the front side or the rear side in the vehicle front-rear direction. Because this vertical wall portion is structured with the angled portion, at a time of vehicle collision, an impact load applied to the pillar may be more dispersed than in a structure in which a vertical wall portion is provided without an angled portion.

In a vehicle side portion structure according to a fourth aspect of the present disclosure, in the vehicle side portion structure of the first aspect, a through-hole is formed in the side wall portion and the vertical wall portion is provided at a front side in the vehicle front-rear direction relative to the through-hole.

In the vehicle side portion structure according to the fourth aspect, because the vertical wall portion to which the outer panel is joined is provided at the front side in the vehicle front-rear direction relative to the through-hole formed at the side wall portion, water protection of the through-hole may be improved.

In a vehicle side portion structure according to a fifth aspect of the present disclosure, in the vehicle side portion structure of the fourth aspect, the through-hole is formed to allow insertion of a door harness.

In the vehicle side portion structure according to the fifth aspect, because the door harness can be inserted in the through hole formed at the side wall portion and water protection of the through-hole through which the door harness is inserted is improved, damage to electronic equipment due to ingression of rainwater or the like may be suppressed.

In a vehicle side portion structure according to a sixth aspect of the present disclosure, in the vehicle side portion structure of the first aspect, a rocker extends in the front-rear direction at the outer side, in the vehicle width direction, of a floor portion of a cabin, an abutting portion is provided at a lower end, in the vehicle vertical direction, of the vertical wall portion, and the abutting portion abuts against the rocker.

In the vehicle side portion structure according to the sixth aspect, the abutting portion is provided at the lower end in the vehicle vertical direction of the vertical wall portion. The abutting portion abuts against the rocker that extends in the vehicle front-rear direction at the vehicle width direction outer side of the floor portion of the cabin. The joining surface to which the outer panel is joined is provided at the vertical wall portion. Therefore, because the abutting portion that abuts against the rocker is provided at the lower end of the vertical wall portion, the seal line may be continued to a rocker side.

In a vehicle side portion structure according to a seventh aspect of the present disclosure, in the vehicle side portion structure of the first aspect, the plural ribs are linked with the vertical wall portion.

In the vehicle side portion structure according to the seventh aspect, the vertical wall portion is provided at the pillar and the plural ribs are linked with the vertical wall portion. Therefore, compared to a structure that is not provided with the ribs, stiffness of the side wall portion and the vertical wall portion themselves may be raised, and the stiffness of the pillar may be improved.

Moreover, the pillar may be made lighter in weight than a structure in which plate thicknesses of the side wall portion and the vertical wall portion are increased in order to improve the stiffness of the side wall portion and the vertical wall portion.

In a vehicle side portion structure according to an eighth aspect of the present disclosure, in the vehicle side portion structure of the seventh aspect, one or more of the plural ribs are provided along substantially the same lines at front and rear sides in the vehicle front-rear direction of the vertical wall portion.

In the vehicle side portion structure according to the eighth aspect, because one or more of the ribs are provided at the front and rear sides in the vehicle front-rear direction of the side wall portion structuring a portion of the pillar, substantially along straight lines, an impact load at a time of vehicle collision may be efficiently transmitted through the pillar toward the rear side in the vehicle front-rear direction.

In a vehicle side portion structure according to a ninth aspect of the present disclosure, in the vehicle side portion structure of the first aspect, the side wall portion is molded integrally with the wheel house.

In the vehicle side portion structure according to the ninth aspect, because the side wall portion structuring a portion of the pillar is molded integrally with the wheel house, a number of components may be reduced compared to a structure in which the side wall portion and the wheel house are each molded and the molded side wall portion and wheel house are integrated by being joined to one another, and a number of assembly steps is reduced.

In a vehicle side portion structure according to a tenth aspect of the present disclosure, the vehicle side portion structure of the ninth aspect further includes a cross member that links the wheel houses at left and right sides in the vehicle width direction, wherein the left and right wheel houses, left and right side wall portions, and the cross member are integrally molded.

The vehicle side portion structure according to the tenth aspect is further provided with the cross member that links the left and right wheel houses in the vehicle width direction. Because the left and right wheel houses, the left and right side wall portions and the cross member are integrally molded, a number of components may be reduced compared to a structure in which left and right members are separately molded and the molded left and right members are integrated by being respectively joined to one another, and a number of assembly steps is reduced.

As described above, a vehicle side portion structure according to the present disclosure may prevent an impact load at a time of vehicle collision being directly applied to a joining surface between a side wall portion and an outer panel.

### BRIEF DESCRIPTION OF THE DRAWINGS

Fig. 1 is a schematic perspective view of a vehicle in which a vehicle side portion structure according to an exemplary embodiment of the present disclosure is employed, seen diagonally from the front-right and upper side of the vehicle;
Fig. 2 is a magnified perspective view of principal portions, showing a magnification of principal portions of the vehicle shown in Fig. 1;
Fig. 3 is a magnified side view of principal portions, showing a magnification of the principal portions of the vehicle shown in Fig. 1;
Fig. 4 is a sectional view cut along line A-A shown in Fig. 3; and
Fig. 5 is a magnified perspective view of principal portions, showing a state in which an outer panel is joined to the vehicle shown in Fig. 2.

### DETAILED DESCRIPTION

A vehicle side portion structure according to an exemplary embodiment of the present disclosure is described with referring to the attached drawings. Herein, the arrow FR that is shown where appropriate in the drawings indicates the front in a vehicle front-rear direction, the arrow UP indicates upper in a vehicle vertical direction, and the arrow RH indicates the right in a vehicle width direction, indicating a vehicle width direction outer side in the present exemplary embodiment. Where descriptions are given below simply using the directions front, rear, upper, lower, left and right, unless otherwise specified, these represent front and rear in the vehicle front-rear direction, upper and lower in the vehicle vertical direction, and left and right in the vehicle left-right direction (vehicle width direction).

### = Structures of the vehicle side portion structure =

First, structures of the vehicle side portion structure according to the present exemplary embodiment are described.

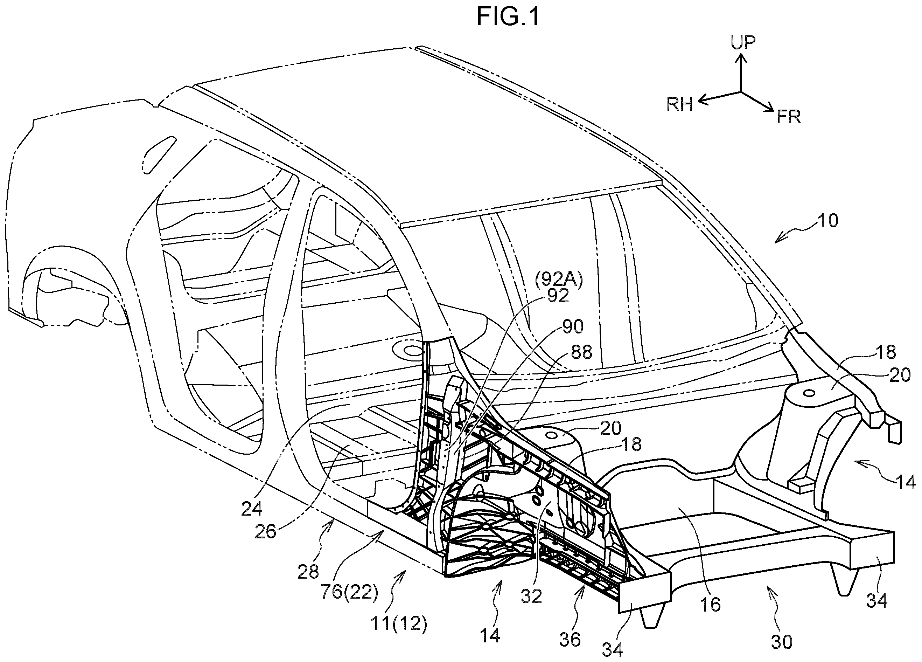

Fig. 1 is a whole-vehicle view showing a framework of a vehicle 10 in which a vehicle side portion structure 12 according to the present exemplary embodiment is employed. Although not shown in the drawings, the vehicle 10 is an electric car, a fuel cell car or the like that runs on motive power generated by a power unit.

As shown in Fig. 1, in the present exemplary embodiment, a left and right pair of wheel houses 14 are provided at a front side vehicle framework 11 of the vehicle 10. Respective wheels (not shown in the drawings) are accommodated in the left and right pair of wheel houses 14. The left and right pair of wheel houses 14 are linked by a cross member 16 that extends in the vehicle width direction. A respective apron upper member 18 extends in the vehicle front-rear direction at an upper end of each wheel house 14. A suspension tower 20 is provided at an inner side, in the vehicle width direction, of the apron upper member 18.

A respective front pillar (a pillar) 22 that serves as a portion of the front side vehicle framework 11 is provided at a rear portion of each wheel house 14. A rocker 28 is joined by fastening, welding or the like to a lower end of the front pillar 22. The rocker 28 extends in the vehicle front-rear direction at an outer side, in the vehicle width direction, of a floor panel 26 that structures a floor portion of a vehicle cabin 24. In the present exemplary embodiment, a cross-sectional shape of the rocker 28 cut along the vehicle width direction is formed as, for example, a substantially rectangular shape.

The left and right wheel houses 14, the cross member 16 and the front pillars 22 are integrally molded (as a casting 30) by casting of a material that is an aluminum alloy, a magnesium alloy or the like. The structure of a die for the casting 30 according to the present exemplary embodiment is such that in the formation of surfaces at outer sides, in the vehicle width direction, of the wheel houses 14 and front pillars 22, a die is slid to the outer sides in the vehicle width direction. Therefore, the wheel houses 14 and front pillars 22 according to the present exemplary embodiment are formed such that outer sides, in the vehicle width direction, thereof are formed to be open.

The wheel houses 14, cross member 16 and front pillars 22 are respectively parts that structure portions of the casting 30. Therefore, strictly speaking, each wheel house 14 is a wheel house portion of the casting 30, the cross member 16 is a cross member portion of the casting 30, and each front pillar 22 is a front pillar portion of the casting 30. However, for convenience in the present exemplary embodiment, these parts are respectively described as the wheel house 14, the cross member 16 and the front pillar 22.

### - Wheel house -

First, the wheel house 14 according to the present exemplary embodiment is described.

As shown in Fig. 1, the wheel house 14 is provided at an inner side thereof, in the vehicle width direction, with an inner wall portion 32 that extends in the vehicle front-rear direction and the vehicle vertical direction. At an upper side of a front side member 36, which is described below, the inner wall 32 is formed in a curved shape along the shape of the suspension tower 20 and toward the vehicle width direction inner side.

A front wall portion 34 extends toward an outer side, in the vehicle width direction, from a front end of the wheel house 14. The front wall portion 34 extends in the vehicle width direction and the vehicle vertical direction. A front bumper (not shown in the drawings) extends in the vehicle width direction at the front wall portion 34. Although not shown in the drawings, a crash box that plays as an impact-absorbing member extends in the vehicle front-rear direction between the front wall portion 34 and the front bumper.

The apron upper member 18 as described above is provided at the upper end of the wheel house 14. The front side member 36 extends in the vehicle front-rear direction from a lower side of a front portion of the wheel house 14. In the present exemplary embodiment, the front side member 36 is formed integrally with the wheel house 14.

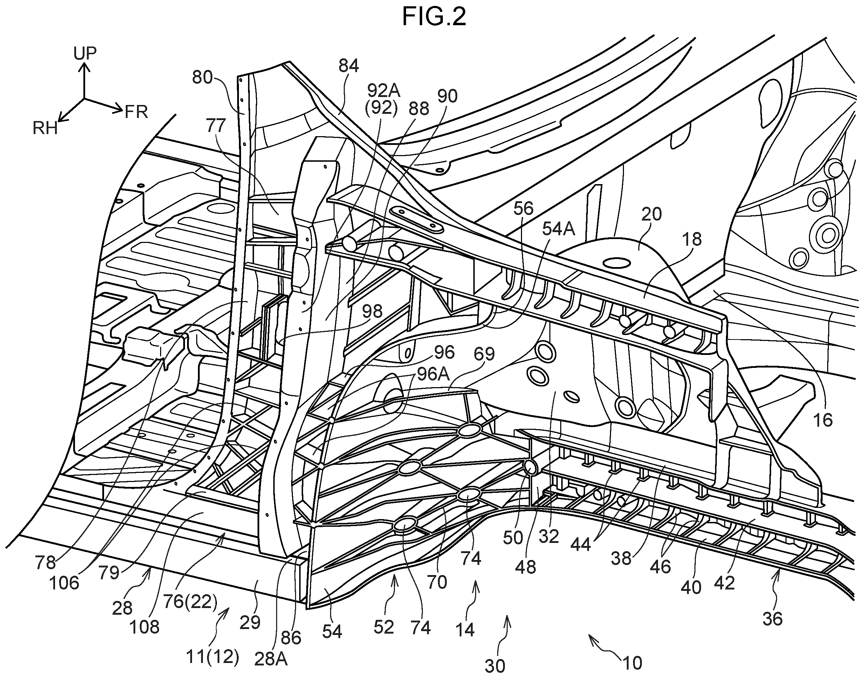

As shown in Fig. 2, the front side member 36 includes an upper wall 38 and a lower wall 40 that each extend in the vehicle front-rear direction. A horizontal wall 42 extends in the vehicle front-rear direction between the upper wall 38 and the lower wall 40. The upper wall 38, the lower wall 40 and the horizontal wall 42 respectively extend toward the vehicle width direction outer side from the inner wall portion 32 of the wheel house 14.

In the present exemplary embodiment, vertical ribs 44 are provided along the vehicle vertical direction between the upper wall 38 and the horizontal wall 42. The vertical ribs 44 are arrayed in the vehicle front-rear direction. Vertical ribs 46 are provided along the vehicle vertical direction between the horizontal wall 42 and the lower wall 40. Similarly to the vertical ribs 44, the vertical ribs 46 are arrayed in the vehicle front-rear direction.

A rear wall 48 is provided from the upper wall 38 to the lower wall 40 at the rear end of the front side member 36. A substantially tubular or substantially cylindrical boss 50 is provided at a junction of the rear wall 48 with the horizontal wall 42.

A curved portion 52 is formed at a rear side of the front side member 36. The curved portion 52 bulges toward the vehicle rear side and the vehicle upper side, and projects toward an outer side.in the vehicle width direction. The curved portion 52 is provided to span a rear side of the suspension tower 20. The curved portion 52 descends further to a lower side than the lower wall 40 of the front side member 36, and has a larger cross-sectional height in the vehicle vertical direction than the front side member 36.

A curved wall 54 is provided at a rear end of the curved portion 52. In a state in which a predetermined gap is formed between the curved wall 54 and a wheel, which is not shown in the drawings, the curved wall 54 bulges to the vehicle upper side and is formed in a circular arc shape in a vehicle side view.

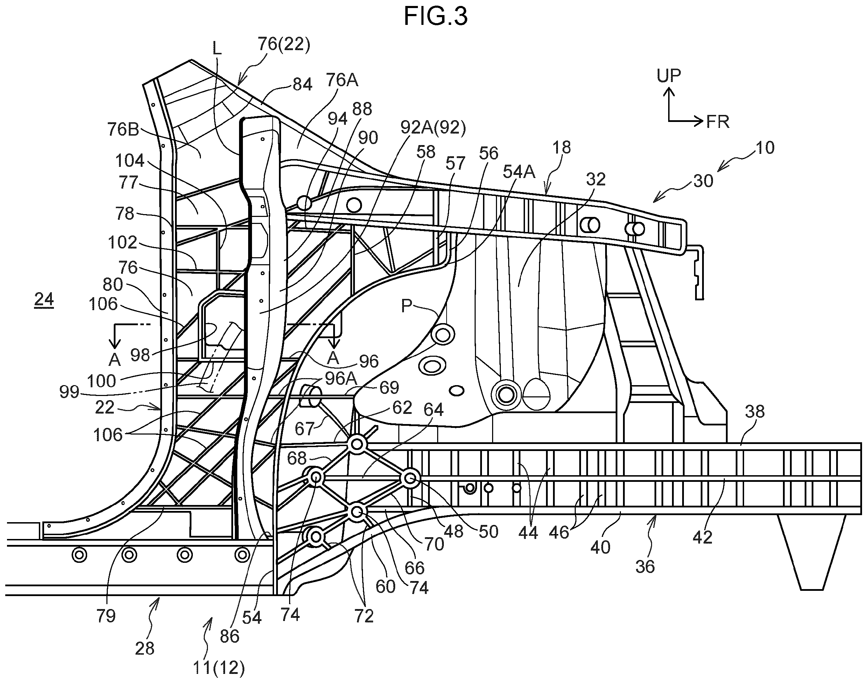

As shown in Fig. 2 and Fig. 3, an upper end 54A of the curved wall 54 is disposed at an upper side of the rear wall 48 of the front side member 36. A connecting wall 56 is provided that links the upper end 54A of the curved wall 54 with the apron upper member 18. Connecting walls 57 and 58 are each provided at a rear side of the connecting wall 56. The connecting walls 57 and 58 vertically link the curved wall 54 with the apron upper member 18. Fig. 3 is a magnified side view of portions of the vehicle 10, in which the principal portions in Fig. 1 are shown magnified.

A lower portion of the curved wall 54 is formed in a substantially linear shape toward the vehicle lower side. A lower wall 60 is inclined to a lower side with extending toward the vehicle rear side from the lower wall 40 of the front side member 36. A rear end of the lower wall 60 is linked to a lower end of the curved wall 54.

Horizontal ribs 62, 64 and 66 protrude from, respectively, the upper wall 38, horizontal wall 42 and lower wall 40 of the front side member 36. The horizontal ribs 62, 64 and 66 link with the curved wall 54. A horizontal rib 69 is provided at an upper side of the horizontal rib 62. The horizontal rib 69 links the curved wall 54 with a ridgeline P that is formed in a curved shape toward an inner side, in the vehicle width direction, along the shape of the suspension tower 20.

A diagonal rib 67 is formed between the horizontal rib 69 and the horizontal rib 62. The diagonal rib 67 forms a truss structure between the horizontal rib 69 and horizontal rib 62. A diagonal rib 68 is formed between the horizontal rib 62 and the horizontal rib 64. The diagonal rib 68 forms a truss structure between the horizontal rib 62 and horizontal rib 64. A diagonal rib 70 is formed between the horizontal rib 64 and the horizontal rib 66. The diagonal rib 70 forms a truss structure between the horizontal rib 64 and horizontal rib 66. The diagonal ribs 68 and 70 each protrude as far as the curved wall 54. Connecting ribs 72 extend between the diagonal rib 70 and the lower wall 60.

Substantially tubular or substantially cylindrical bosses 74 are respectively provided at junctions between the ribs such as, for example, between the horizontal ribs 62 and 64 and the diagonal rib 68, between the horizontal ribs 64 and 66 and the diagonal rib 70, and the like. At the time of molding of the casting 30 that includes the wheel house 14, at least some of the bosses 50 and 74 serve as pads for ejector pins, which are not shown in the drawings, to abut against when the ejector pins are being used to remove the casting 30 from the die. The bosses 50 and 74 may also be used as seats for fastening other components, and may differ in shape depending on their uses.

### - Front pillar -

The front pillar 22 is described.

As shown in Fig. 2 and Fig. 3, the front pillar 22 is molded integrally with the wheel house 14 in the present exemplary embodiment. The front pillar 22 is provided at the vehicle rear side of the wheel house 14 and extends in the vehicle vertical direction. The front pillar 22 includes a pillar inner panel 76 that structures an inner plate of the front pillar 22. At an inner side, in the vehicle width direction, the pillar inner panel 76 is provided with a side wall portion 77 that extends in the vehicle front-rear direction and the vehicle vertical direction. The side wall portion 77 is formed to link with the inner wall portion 32 of the wheel house 14.

The curved wall 54 formed at the rear end of the curved portion 52 of the wheel house 14 is provided at a front end of the pillar inner panel 76 (the side wall portion 77). A rear wall 78 is provided at a rear end of the pillar inner panel 76. The rear wall 78 extends toward an outer side, in the vehicle width direction, from the side wall portion 77. A lower wall 79 protrudes from a lower end of the rear wall 78. The lower wall 79 is formed in the vehicle front-rear direction and links with a vertical wall portion 88, which is described below.

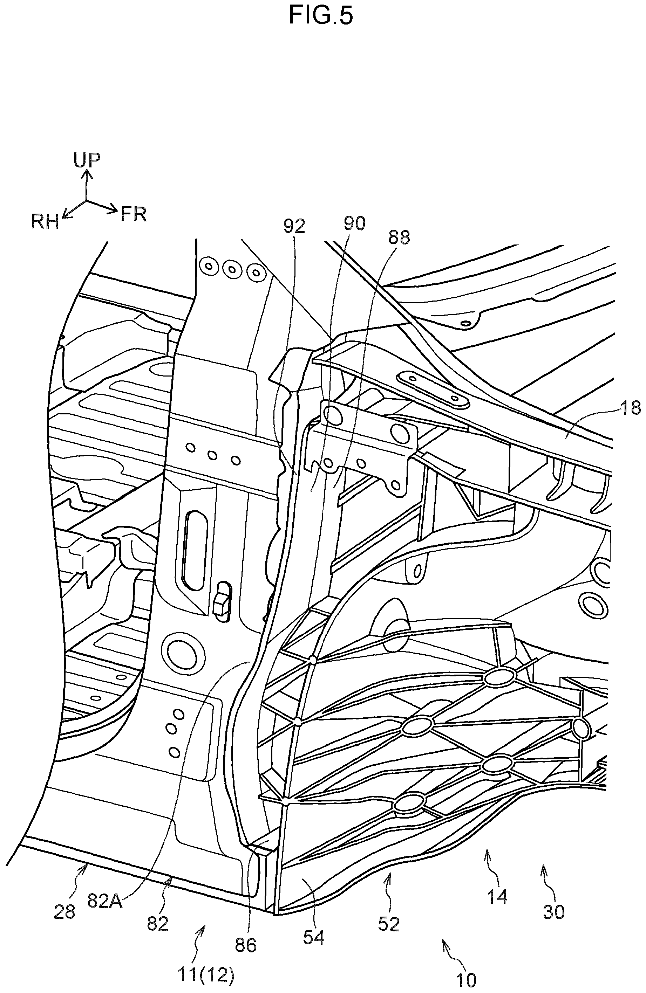

A flange 80 is provided to inflect toward the vehicle rear side from a distal end of the rear wall 78. A pillar outer panel 82, which is shown in Fig. 5, structures an outer plate of the front pillar 22. A rear end of the pillar outer panel 82 may be joined to the flange 80. The pillar outer panel 82 is a portion of a side outer member that structures an outer plate of the vehicle side portion.

As shown in Fig. 2, an upper flange portion 84 is formed at an upper end of the pillar inner panel 76. A front glass, which is not shown in the drawings, is joined to the upper flange portion 84, and the upper flange portion 84 supports the front glass. An abutting portion 86 is formed at a lower end of the pillar inner panel 76. The abutting portion 86 is seated on an upper wall 28A of the rocker 28.

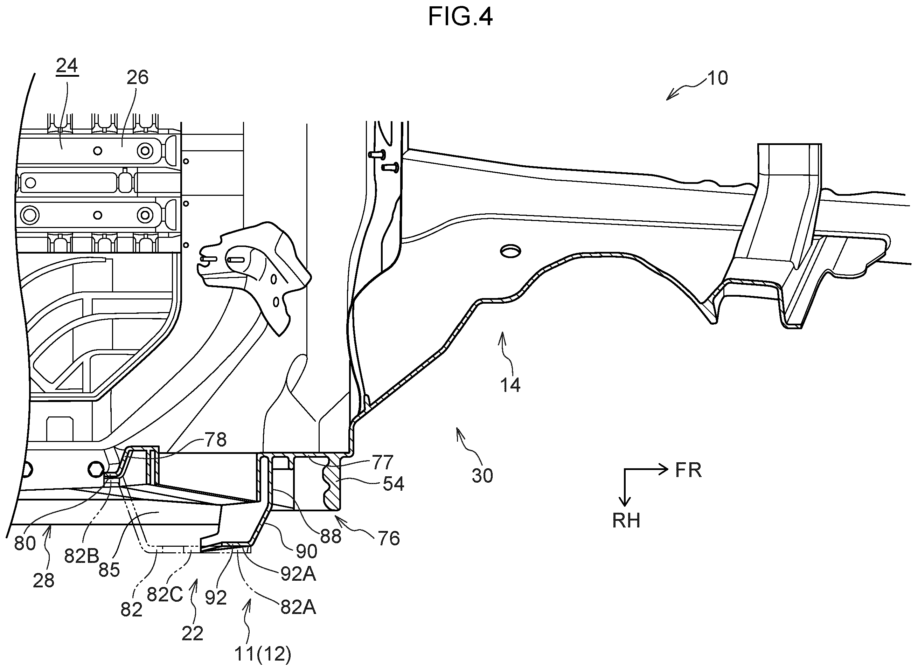

The vertical wall portion 88 extends toward an outer side, in the vehicle width direction, along the vehicle vertical direction at a central portion in the vehicle front-rear direction of the pillar inner panel 76. As shown in Fig. 4, an angled portion 90 is formed at least at a portion of the vertical wall portion 88. The angled portion 90 is inclined to the rear side in the vehicle front-rear direction, on progression toward the outer side in the vehicle width direction. A joining wall 92 that extends in the vehicle vertical direction is inflected toward the vehicle rear side from a distal end of the angled portion 90.

As shown in Fig. 5, a front end portion 82A of the pillar outer panel 82 is joined to the joining wall 92. The pillar outer panel 82 structures the outer plate of the front pillar 22. A rear end portion 82B of the pillar outer panel 82 may be joined to the flange 80 formed at the rear wall 78 of the pillar inner panel 76. The vertical wall portion 88 and the angled portion 90, including the joining wall 92, are formed to match the shape of a side of the pillar outer panel 82 at which the front end portion 82A is provided. That is, the shapes of the joining wall 92, the vertical wall portion 88 and the angled portion 90 may be suitably modified in accordance with the shape of the side of the pillar outer panel 82 at which the front end portion 82A is provided.

The joining wall 92 is formed further to the outer side, in the vehicle width direction, than the flange 80 and the curved wall 54. As shown in Fig. 2 and Fig. 3, a portion of the joining wall 92 disposed at the vehicle outer side serves as a joining surface 92A. A "seal line L" is specified along the vehicle vertical direction at the joining surface 92A. The joining surface 92A is formed (disposed) to be substantially continuous in the vehicle vertical direction with the upper flange portion 84, which is formed at the upper end of the pillar inner panel 76 and joined to the front glass, and the abutting portion 86, which is formed at the lower end of the pillar inner panel 76 and joined to the upper wall 28A of the rocker 28.

At a side of the pillar inner panel 76, with respect to the vertical wall portion 88, at which a front portion 76A is provided, the connecting wall 58 vertically links between the curved wall 54 and the apron upper member 18. A horizontal rib 94 extends in the vehicle front-rear direction between the connecting wall 58 and the vertical wall portion 88. The horizontal rib 94 extends at a side at which the apron upper member 18 is disposed.

At the front portion 76A of the pillar inner panel 76, plural horizontal ribs 96 extend in the vehicle front-rear direction between the curved wall 54 and the vertical wall portion 88. Some horizontal ribs 96A of the plural horizontal ribs 96 link, via the curved wall 54, with the horizontal rib 69 and horizontal rib 62 formed at the curved portion 52 of the wheel house 14.

At a side of the pillar inner panel 76 at which a rear portion 76B is provided, a through-hole 98 is formed at a substantially central portion, in the vehicle vertical direction, of the pillar inner panel 76. A door harness 99, for example, can be inserted through this through-hole 98. A rectangular rib 100 is formed at a peripheral edge of the through- hole 98. The rectangular rib 100 is formed in a substantially rectangular shape in vehicle side view and extends toward the vehicle width direction outer side.

At an upper side of the rectangular rib 100, the horizontal rib 94, which is formed at the side of the pillar inner panel 76 at which the front portion 76A is provided, extends to the rear wall 78. At a lower side of the horizontal rib 94, formed at the side of the pillar inner panel 76 at which the rear portion 76B is provided, a horizontal rib 102 extends in the vehicle front-rear direction between the vertical wall portion 88 and the rear wall 78.

At the side of the pillar inner panel 76 at which the rear portion 76B is provided, a vertical rib 104 extending in the vehicle vertical direction is provided between the adjacent horizontal ribs 94 and 102. The vertical rib 104 also extends to the rectangular rib 100.

At a lower side of the rectangular rib 100, the plural horizontal ribs 96, formed at the side of the pillar inner panel 76 at which the front portion 76A is provided, extend through the vertical wall portion 88 of the pillar inner panel 76 to the rear wall 78.

Plural diagonal ribs 106 cross the horizontal ribs 96 and the like at the pillar inner panel 76 (the front portion 76A and the rear portion 76B). The diagonal ribs 106 extend from the connecting wall 58 and curved wall 54 of the front portion 76A of the pillar inner panel 76 to the rear wall 78 and lower wall 79 of the rear portion 76B of the pillar inner panel 76, traversing the vertical wall portion 88 and the rectangular rib 100. The diagonal ribs 106 are formed to be angled to the vehicle lower side (the side thereof at which the rocker 28 is disposed) toward the vehicle rear side.

The horizontal ribs 96, diagonal ribs 106 at the pillar inner panel 76 are formed at positions that are lower than the curved wall 54 and the vertical wall portion 88. As shown in Fig. 2, a joining portion 108 is provided at a lower side of the lower wall 79 of the pillar inner panel 76. The joining portion 108 is joined to a front end portion 29 of the rocker 28.

### = Operation and effects of the vehicle side portion structure =

Now, operation and effects of the vehicle side portion structure according to the present exemplary embodiment are described.

As shown in Fig. 1 and Fig. 2, the vehicle side portion structure 12 according to the present exemplary embodiment is provided with the pillar inner panel 76 having the side wall portion 77, the vertical wall portion 88 and the joining surface 92A. The pillar inner panel 76 constitutes a portion of the front side vehicle framework 11 of the vehicle 10, is provided at the rear side, in the vehicle front-rear direction, relative to the wheel house 14 constituting at least another portion of the front side vehicle framework 11, and extends in the vehicle vertical direction.

The vertical wall portion 88 projects to the outer side, in the vehicle width direction, from the side wall portion 77, and the joining surface 92A protrudes in the vehicle front-rear direction from the distal end of the vertical wall portion 88. The pillar outer panel 82 that, together with the pillar inner panel 76, structures a portion of the front side vehicle framework 11 of the vehicle 10 is joined to the joining surface 92A.

In general, an impact load transmitted to the wheel house 14 at a time of collision of the vehicle 10 is transmitted to the pillar inner panel 76 that is provided at the rear side, in the vehicle front-rear direction, relative to the wheel house 14. In the present exemplary embodiment, the vertical wall portion 88 projects to the vehicle width direction outer side from the side wall portion 77, the joining wall 92 is inflected toward the vehicle rear side from the distal end of the vertical wall portion 88, and the joining surface 92A to which the pillar outer panel 82 is joined is provided at the joining wall 92. Therefore, the joining surface 92A is disposed further to the vehicle width direction outer side than the side wall portion 77.

Thus, because the position of the joining surface 92A is shifted to the outer side, in the vehicle width direction, relative to a position of application of the impact load transmitted to the pillar inner panel 76 via the wheel house 14 at the time of collision of the vehicle 10, direct application of the impact load to the joining surface 92A may be prevented.

Furthermore, as shown in Fig. 4, because the joining surface 92A is provided at a face at the vehicle width direction outer side, visibility of the seal line L for joining the pillar outer panel 82 may be assured. Because the visibility of this seal line L is assured, sealing with the pillar outer panel 82 may be improved and a number of steps in quality management may be reduced.

In the present exemplary embodiment, in a state in which the pillar outer panel 82 is joined to the joining surface 92A provided at the pillar inner panel 76, a closed cross section portion 85 is formed between the pillar inner panel 76 and the pillar outer panel 82. Therefore, stiffness of the front pillar 22 including the pillar inner panel 76 and pillar outer panel 82 may be improved compared to, for example, a structure that has an open cross section in a state in which a pillar inner panel and a pillar outer panel are joined.

As shown in Fig. 3 and Fig. 4, at least a portion of the vertical wall portion 88 provided at the pillar inner panel 76 includes the angled portion 90. When the vertical wall portion 88 extends toward the vehicle width direction outer side, the angled portion 90 is inclined toward the rear side in the vehicle front-rear direction. Thus, because the vertical wall portion 88 is structured with the angled portion 90, at a time of collision of the vehicle 10, an impact load applied to the front pillar 22 may be more dispersed than in a structure in which a vertical wall portion along the vehicle width direction is provided without an angled portion.

In general, in a cross-sectional shape of a pillar cut along a vehicle front-rear direction, a pillar inner panel is formed in a plate shape and a pillar outer panel is formed substantially in a hat shape whose inner side, in a vehicle width direction, is open. When a pillar outer panel with this shape is press-machined, a "deep drawing" process is used and molding is difficult. Therefore, producing this pillar outer panel with high precision is difficult.

In the present exemplary embodiment, by contrast, the joining wall 92 provided at the vertical wall portion 88 of the pillar inner panel 76 is formed at further outer side, in the vehicle width direction, than the flange 80 of the pillar inner panel 76. Therefore, positions, in the vehicle width direction, of the pillar outer panel 82 that is joined to the pillar inner panel 76 are offset between the front end portion 82A and the rear end portion 82B of the pillar outer panel 82.

There is no need to provide a height (depth) at a side of the pillar outer panel 82 at which the front end portion 82A is provided, and, from the front end portion 82A to a main body portion 82C, the pillar outer panel 82 may extends at substantially the same positions in the vehicle width direction. Therefore, the shape of the pillar outer panel 82 in the present exemplary embodiment may be simplified, molding is correspondingly simpler, and manufacturing precision of the pillar outer panel 82 may be raised.

The joining wall 92 of the pillar inner panel 76 forming a portion of the casting 30 may be provided with higher manufacturing precision than a structure that is formed by joining plural components, in accordance with the absence of dimensional tolerances of these components. The main body portion 82C of the pillar outer panel 82 is formed substantially linearly with the front end portion 82A that is joined to the joining wall 92, and is at substantially the same position in the vehicle width direction as the front end portion 82A. As a result, positional precision of a door hinge portion provided at the pillar outer panel 82 may be improved in the present exemplary embodiment. In addition, because the main body portion 82C of the pillar outer panel 82 is formed to be substantially linear with the front end portion 82A joined to the joining wall 92, stiffness of the pillar outer panel 82 itself is improved.

In the present exemplary embodiment, the vertical wall portion 88, at which the joining wall 92 to which the pillar outer panel 82 is joined is formed, is provided at the front side, in the vehicle front-rear direction, relative to the through-hole 98 formed at the pillar inner panel 76. Therefore, water protection of the through-hole 98 may be improved. The through-hole 98 allows insertion of the door harness 99. Thus, because the water protection of the through-hole 98 through which the door harness 99 is inserted is improved, damage to electronic equipment due to ingression of rainwater or the like may be suppressed.

In the present exemplary embodiment, the rectangular rib 100 is formed at the peripheral edge of the through-hole 98, and the horizontal ribs 96, the vertical rib 104 and the diagonal ribs 106 link with the rectangular rib 100, reinforcing the through-hole 98. Deformation of the through- hole 98 at a time of collision of the vehicle 10 may be prevented, and deformation of the door hinge portion may be prevented as a result.

The pillar inner panel 76 is formed at the casting 30, and the joining wall 92 to which the pillar outer panel 82 is joined is provided at the vehicle width direction outer side of the side wall portion 77. Because the vertical wall portion 88 and the joining wall 92 are provided at the pillar inner panel 76, a cavity (the closed cross section portion 85) may be formed at the pillar inner panel 76 according to the present exemplary embodiment. Because the pillar inner panel 76 forms a portion of the casting 30, this cavity is in communication with the interior of the vehicle cabin 24. Therefore, a hole may be formed at the pillar inner panel 76, a wire harness routed inside the vehicle cabin 24 may be accommodated in this cavity, and comfort of space within the vehicle cabin 24 may be improved.

The abutting portion 86 abutting against the rocker 28 is provided at the lower end of the vertical wall portion 88 according to the present exemplary embodiment. The joining surface 92A to which the pillar outer panel 82 is joined is provided at the vertical wall portion 88, and the seal line L is provided along the joining surface 92A. Therefore, because the abutting portion 86 that abuts against the rocker 28 is provided at the lower end of the vertical wall portion 88, the seal line L may be continued to a rocker 28 side.

The upper flange portion 84 to which the front glass, which is not shown in the drawings, is joined is formed at an upper end of the vertical wall portion 88 according to the present exemplary embodiment. The seal line L at which the pillar outer panel 82 is joined may extend to the rocker 28 side and to a front glass side. The seal line L may be provided substantially continuously from the pillar inner panel 76 to the rocker 28 and front glass sides, and sealing may be further improved.

The plural horizontal ribs 96, diagonal ribs 106 and the like are provided at the pillar inner panel 76, projecting toward the outer side, in the vehicle width direction, and linking with the vertical wall portion 88. Therefore, stiffness of the pillar inner panel 76 and the vertical wall portion 88 may be improved compared to a structure in which the horizontal ribs 96, diagonal ribs 106 and the like are not provided. Moreover, the present exemplary embodiment may be made lighter in weight than a structure in which plate thicknesses of the pillar inner panel 76 and the vertical wall portion 88 are increased in order to improve the stiffness of the pillar inner panel 76 and the vertical wall portion 88.

At the pillar inner panel 76 according to the present exemplary embodiment, the horizontal ribs 96 and the like are provided in substantially along straight lines, in the vehicle front-rear direction, at the front side and rear side of the vertical wall portion 88. Therefore, an impact load at a time of collision of the vehicle 10 may be transmitted to the rear side in the vehicle front-rear direction.

At the pillar inner panel 76 according to the present exemplary embodiment, the plural diagonal ribs 106 crossing the horizontal ribs 96 and the like extend from the connecting wall 58 of the front portion 76A to the rear wall 78 of the rear portion 76B of the pillar inner panel 76. These diagonal ribs 106 are formed to be angled toward a side at which the rocker 28 is disposed. An impact load at a time of collision of the vehicle 10 may be transmitted to the rear side in the vehicle front-rear direction and may also be transmitted toward the side at which the rocker 28 is disposed.

In the present exemplary embodiment, the horizontal ribs 96 and the like and the diagonal ribs 106 and the like reinforce one another by ribs with different inclination angles linking with one another. In addition, a load transmitted to the ribs may be dispersed. Thus, concentration of an impact load may be reduced or prevented.

In the present exemplary embodiment, the pillar inner panel 76 is integrally molded with the wheel house 14 by casting. Therefore, in contrast to a structure in which the pillar inner panel 76 and the wheel house 14 are separately molded and the molded pillar inner panel 76 and wheel house 14 are integrated by being joined to one another, fasteners for fastening the wheel house 14 and pillar inner panel 76 are unnecessary, and a number of components may be reduced. Because the number of components is reduced, a number of assembly steps may be reduced.

As shown in Fig. 1, the present exemplary embodiment is further provided with the cross member 16 that links the left and right wheel houses 14 in the vehicle width direction, and the left and right wheel houses 14, left and right pillar inner panels 76 and cross member 16 are molded integrally. Therefore, in the present exemplary embodiment, a number of components may be reduced compared to a structure in which the left and right wheel houses 14 and pillar inner panels 76 are separately molded and the molded left and right wheel houses 14 and left and right pillar inner panels 76 are respectively joined to integrate the left and right via the cross member 16.

In the present exemplary embodiment, because the number of components is reduced, as shown in Fig. 3, the seal line L may be simplified and a number of work steps may be reduced. In a comparative example that is not shown in the drawings, when separate members are joined, a seal line is necessary for each member, and the seal line L is broken between adjacent members. In the present exemplary embodiment, by contrast, because the pillar inner panel 76 and the wheel house 14 are integrated by the casting 30, continuity of the seal line L may be assured and sealing is improved.

The horizontal ribs 96, diagonal ribs 106 and the like are formed at lower positions compared to the curved wall 54 and the vertical wall portion 88. Because the front pillar 22 is a portion of the casting 30 that is integrally molded by casting, short shots caused by fluidity problems during molding may be prevented or suppressed.

### = Supplementary descriptions of the exemplary embodiment =

In the present exemplary embodiment, as shown in Fig. 4, the angled portion 90 is formed at least at a portion of the vertical wall portion 88 provided at the pillar inner panel 76. However, the vertical wall portion 88 may be constituted by the angled portion 90. That is, the angled portion 90 may be provided from the base to the distal end of the vertical wall portion 88.

In the present exemplary embodiment, the angled portion 90 is inclined to the rear side, in the vehicle rear front-rear direction, on progression toward the outer side in the vehicle width direction. However, this is not limiting, because it is sufficient that an impact load applied at a time of collision of the vehicle 10 may be dispersed. For example, the angled portion 90 may be inclined to the front side, in the vehicle front-rear direction, on progression toward the outer side in the vehicle width direction.

In the present exemplary embodiment, the joining wall 92 is inflected toward the vehicle rear side from the distal end of the angled portion 90, but this is not limiting. The joining wall 92 may be formed to be inflected toward the vehicle front side.

In the present exemplary embodiment, the closed cross section portion 85 is formed between the pillar inner panel 76 and the pillar outer panel 82 but this is not limiting. The closed cross section portion 85 does not necessarily need to be provided along the whole of the front pillar 22 in the vehicle vertical direction.

In the present exemplary embodiment as illustrated in Fig. 1, an example is described in which the floor portion of the vehicle cabin 24 is structured by the floor panel 26. However, this is not limiting, because it is sufficient that the lower portion of the vehicle cabin 24 can be bounded. For example, although not shown in the drawings, the floor portion of the vehicle cabin 24 may be structured by an upper wall portion of a battery case mounted in the vehicle 10.

As illustrated in Fig. 1, an example is described in which the casting 30 is integrally molded by casting of the left and right wheel houses 14 and the cross member 16, but this is not limiting. For example, although not shown in the drawings, a right side casting, in which the wheel house 14 at the right side and the right half of the cross member 16 are integrally molded by casting, and a left side casting, in which the wheel house 14 at the left side and the left half of the cross member 16 are integrally molded by casting, may be integrated with one another by being joined at a joining portion. With this structure, because the cast members may be formed to be smaller than the casting 30 according to the present exemplary embodiment, costs associated with a molding mechanism including die equipment may be reduced.

Hereabove, an exemplary embodiment of the present disclosure has been described, but the present disclosure is not limited by this exemplary embodiment. The exemplary embodiment and various variant examples may be used in suitable combinations, and it will be clear that numerous modes may be embodied within a technical scope not departing from the scope of the present disclosure.

### = Additional remarks =

The structures described below may be suitably combined to serve as the vehicle side portion structure according to the present disclosure.

### - Structure 1 -

A pillar provided at a rear portion of a wheel house of a front side vehicle framework of a vehicle extends in a vehicle vertical direction and includes: a side wall portion that extends in the vehicle vertical direction; plural ribs that project from the side wall portion toward an outer side in a vehicle width direction; a vertical wall portion that projects from the side wall portion further to the outer side in the vehicle width direction than the ribs and that extends in the vehicle vertical direction; and a joining surface that extends in a vehicle front-rear direction from a distal end of the vertical wall portion, an outer panel that structures an outer plate of the pillar being joined to the joining surface.

### - Structure 2 -

An inner panel structures an inner plate of the pillar and includes the side wall portion, and, in the state in which the outer panel is joined to the joining surface, a closed cross section portion is formed between the inner panel and the outer panel.

### - Structure 3 -

The vertical wall portion includes an angled portion, at least a portion of which is inclined to the front side or the rear side in the vehicle front-rear direction toward the outer side in the vehicle width direction.

### - Structure 4 -

A through-hole is formed in the side wall portion and the vertical wall portion is provided at the front side in the vehicle front-rear direction relative to the through-hole.

### - Structure 5 -

The through-hole is formed to allow insertion of a door harness.

### - Structure 6 -

A rocker extends in the front-rear direction at the outer side in the vehicle width direction of a floor portion of a cabin, an abutting portion is provided at a lower end portion in the vehicle vertical direction of the vertical wall portion, and the abutting portion abuts against the rocker.

### - Structure 7 -

The plural ribs link with the vertical wall portion.

### - Structure 8 -

Portions of the plural ribs are provided on substantially the same lines at front and rear in the vehicle front-rear direction of the vertical wall portion.

### - Structure 9 -

The side wall portion is molded integrally with the wheel house.

### - Structure 10 -

A cross member that links the left and right wheel houses in the vehicle width direction is further provided, and the left and right wheel houses, left and right side wall portions, and the cross member are integrally molded.

## Claims

1. A vehicle side portion structure (12), comprising a pillar (22) provided at a rear side of a wheel house (14) in a vehicle framework (11) at a front side of a vehicle, the pillar (22) extending in a vehicle vertical direction and comprising:
a side wall portion (77) that extends in the vehicle vertical direction;
a plurality of ribs (94, 96, 96A, 100, 102, 104, 106) that project from the side wall portion (77) toward an outer side in a vehicle width direction;
a vertical wall portion (88) that projects from the side wall portion (77) further to an outer side, in the vehicle width direction, than the plurality of ribs (94, 96, 96A, 100, 102, 104, 106), and that extends in the vehicle vertical direction; and
a joining surface (92A) that extends in a vehicle front-rear direction from a distal end of the vertical wall portion (88), with an outer panel (82) configuring an outer plate of the pillar (22) being joined to the joining surface (92A).

2. The vehicle side portion structure (12) according to claim 1, further comprising an inner panel (76) that includes the side wall portion (77) and configures an inner plate of the pillar (22), wherein a closed cross section portion is formed between the inner panel (76) and the outer panel (82) in a state in which the outer panel (82) is joined to the joining surface (92A).

3. The vehicle side portion structure (12) according to claim 1 or 2, wherein the vertical wall portion (88) includes an angled portion (90) wherein at least a portion is inclined to a front side or a rear side, in the vehicle front-rear direction, on progression toward an outer side in the vehicle width direction.

4. The vehicle side portion structure (12) according to any of claims 1 to 3, wherein:
a through-hole (98) is formed at the side wall portion (77), and
the vertical wall portion (88) is provided at a front side, in the vehicle front-rear direction, relative to the through-hole (98).

5. The vehicle side portion structure (12) according to claim 4, wherein a door harness (99) is configured insertably relative to the through-hole (98).

6. The vehicle side portion structure (12) according to any of claims 1 to 5, wherein an abutting portion (86) is provided at a lower end, in the vehicle vertical direction, of the vertical wall portion (88), and the abutting portion (86) is configured to abut against a rocker (28), the rocker (28) extending in the vehicle front-rear direction at an outer side, in the vehicle width direction, of a floor portion (26) of a vehicle cabin (24).

7. The vehicle side portion structure (12) according to any of claims 1 to 6, wherein the plurality of ribs (94, 96, 96A, 100, 102, 104, 106) are linked with the vertical wall portion (88).

8. The vehicle side portion structure (12) according to claim 7, wherein one or more of the plurality of ribs (94, 96, 96A, 100, 102, 104, 106) are formed along substantially the same lines at front side and at a rear side, in the vehicle front-rear direction, of the vertical wall portion (88).

9. The vehicle side portion structure (12) according to any of claims 1 to 8, wherein the side wall portion (77) is molded integrally with the wheel house (14).

10. The vehicle side portion structure (12) according to claim 9, further comprising a cross member (16) that links the wheel houses (14) at left and right sides in the vehicle width direction, wherein the left and right wheel houses (14), left and right side wall portions, (77) and the cross member (16) are integrally molded.
